Europäisches Patentamt

(19) European Patent Office

Office européen des brevets

(11) EP 0 792 106 B1

## (12) EUROPEAN PATENT SPECIFICATION

(45) Date of publication and mention
of the grant of the patent:
**09.09.1998 Bulletin 1998/37**

(21) Application number: **95936581.8**

(22) Date of filing: **31.10.1995**

(51) Int. Cl.⁶: **A23D 9/00**, A23D 7/00,
C11C 3/10

(86) International application number:
**PCT/EP95/04294**

(87) International publication number:
**WO 96/14756 (23.05.1996 Gazette 1996/23)**

(54) **PROCESS FOR PREPARING A FAT BLEND AND PLASTIC SPREAD COMPRISING THE FAT BLEND OBTAINED**

VERFAHREN ZUR HERSTELLUNG EINER TRIGLYCERID-FETTMISCHUNG UND DIESE FETTMISCHUNG ENTHALTENDER PLASTISCHER BROTAUFSTRICH

PROCEDE DE PREPARATION D'UN MELANGE DE MATIERES GRASSES ET PATE A TARTINER PLASTIQUE COMPRENANT LE MELANGE AINSI OBTENU

(84) Designated Contracting States:
**AT BE CH DE DK ES FR GB GR IE IT LI NL PT SE**

(30) Priority: **15.11.1994 EP 94203321**

(43) Date of publication of application:
**03.09.1997 Bulletin 1997/36**

(73) Proprietors:
• **UNILEVER N.V.**
**3013 AL Rotterdam (NL)**
Designated Contracting States:
**BE CH DE DK ES FR GR IT LI NL PT SE AT**
• **UNILEVER PLC**
**London EC4P 4BQ (GB)**
Designated Contracting States:
**GB IE**

(72) Inventors:
• **HUIZINGA, Hindrik**
**NL-3146 SH Maassluis (NL)**

• **SASSEN, Cornelis, Laurentius**
**NL-3123 CN Schiedam (NL)**
• **VERMAAS, Leo, Frans**
**NL-3145 VN Maassluis (NL)**

(74) Representative:
**Sikken, Antonius H. J. M. et al**
**UNILEVER N.V.,**
**Patent Division,**
**P.O. Box 137**
**3130 AC Vlaardingen (NL)**

(56) References cited:
| | |
|---|---|
| EP-A- 0 034 065 | EP-A- 0 035 883 |
| EP-A- 0 089 082 | EP-A- 0 115 655 |
| EP-A- 0 151 450 | WO-A-93/24017 |
| WO-A-94/10326 | CA-A- 2 098 314 |
| US-A- 4 341 813 | |

• **DATABASE WPI Week 9215 Derwent Publications Ltd., London, GB; AN 92-120578 & JP,A,04 065 493 (AJINOMOTO KK) , 2 March 1992**

## Description

The invention relates to a process for preparing a fat blend and, to plastic spreads containing such fat blends.

For manufacturing plastic W/O emulsion spreads, e.g. margarine, a margarine fat should be used having a well balanced ratio of liquid and solid fats throughout the entire area of use temperatures which usually is from 5°C to about 20°C.

Historically attempts were made to meet this aim by using blends of natural fats having a sufficient solids content, resulting however in products of unsatisfactory spreadability, consistency and mouthfeel. The use of mixtures of fats hardened to different degrees of saturation is another approach, but for nutritional reasons in recent years the desire is expressed that the level of saturated fatty acids (SAFA) of the component triacyl glyceride of the fats should be kept as low as possible. Besides there are consumers who sometimes express some concern about chemically modifying fats e.g. by hydrogenating or hardening, which may result in trans-unsaturation if partial hardening is involved.

Structuring fats for plastic spreads, e.g. W/O emulsion spreads are also obtained by interesterification, resulting in products having considerably improved properties, however at the expense of considerable costs, particularly if enzymatic interesterification is involved.

Enzymatic interesterification is nowadays preferred over chemical interesterification because it is effected under much milder conditions, and closely resembles processes occurring widely in nature. It is therefore considered to be a more "natural" process. However, thusfar costs have been prohibitively high. We have now found a way to substantially reduce the costs. Whereas in some cases products made with fat blends produced according to our cost-reduced process are sensorically undistinguishable from products made with fat blends from conventional processes, we have found that often sensorically perceivable product advantages can be obtained.

The invention provides a process for preparing a fat blend comprising partially interesterifying a mixture comprising 20-90% of a fat (a) and 10-80% of a fat (b) using an enzyme catalyst to a degree of conversion of 5-95%, wherein fat (a) is selected from the group consisting of lauric fat, liquid oil and mixtures thereof and fat (b) is a $C_{16+}$ fat having mainly 16 and more carbon atoms in the constituting fatty acid chains thereof and having at least 40% SAFA. Preferred embodiments of the process are described in claims 2-10. The invention encompasses fat blends obtainable by this process. A preferred embodiment of the fat blend is given in claim 12. The invention also provides margarine fat comprising 8-100% of the present fat blend and 0-92% of liquid oil and/on other fat, said margarine fat having a trans unsaturated fatty acid content of less than 10%; it also provides plastic spread comprising such margarine fat. Preferred embodiments of the spread are given in claims 15-16.

We have extensively studied the mechanisms of the enzymatic interesterification reaction between fats. We found that at high degrees of conversion, all kind of factors increasingly contribute to the cost. Notably enzyme consumption, one of the main cost factors, increases dramatically. In order to obtain valuable fat blends that can provide spreads with good or even improved properties, the choice of fats that are partially interesterified and their mixing ratio are important. We found that when other fats are used or other mixing ratio's are applied, fat blends are obtained that are less useful than conventional alternatives. Another important aspect affecting costs, we found, is that production capacity can be increased with our process to an extent much higher than proportional to the degree to which the fats were not converted.

For example, we have assessed the relative costs of the enzymatic interesterification as a function of the degree of conversion for a mixture of 35% palmkernel stearine and 65% palm oil stearine, using a 1,3 specific lipase. We obtained the following results.

| Degree of conversion (%) | Relative conversion costs (%) |
|---|---|
| 0 | 0 |
| 20 | 5 |
| 40 | 11 |
| 60 | 20 |
| 70 | 26 |
| 80 | 35 |
| 90 | 50 |
| 95 | 65 |

(continued)

| Degree of conversion (%) | Relative conversion costs (%) |
|---|---|
| 100 | 100 |

The enzymatic interesterification can be carried out in conventional manner except that the flow rate or the reaction time is adapted to obtain the desired degree of conversion. The choice of enzyme is not critical, any enzyme catalysing interesterification of fatty acid residues of triglycerides can be used. 1,3 specific lipase is preferred. The process is preferably carried out using a continuous design employing e.g. a packed bed reactor containing immobilized enzyme. In a continuous process the interesterification may be controlled by controlling the flow rate or throughput of the reaction mixture with respect to the amount of enzyme. The higher the throughput, the lower the degree of conversion and the lower the price. Alternatively a batch reaction, e.g. in a stirred vessel may be used. In batch processes the degree of conversion can be controlled by controlling the reaction time.

For a given process design, the flow rate or reaction time required to obtain a pre-selected rate of conversion, varies depending on the prior use of the catalyst. Therefore, the reaction should be monitored frequently. Although the reaction can be carried out in the presence of a solvent, e.g. hexane, preferably such solvent is not used.

The degree of conversion is sometimes also referred to as conversion rate or just conversion, but these expressions are less correct. The degree of conversion indicates the extent to which the reaction has proceeded. For the present purposes it is expressed as

$$\text{Degree of conversion} = (Xt-Xo)/(Xeq-Xo) \times 100\%$$

wherein

**X** is a measurable property depending on the molecular composition of a triglyceride mixture that reaches its extreme values in the composition prior to the start of the interesterification and in the composition obtained after carrying out the interesterification to completion.

**Xo** is the value of **X** prior to the interesterification

**Xeq** is the value of **X** after carrying out the interesterification to completion.

**Xt** is the value of **X** for the composition for which the degree of conversion is to be determined.

As **X** for example, results from carbon number (CN) analysis or silverphase HPLC analysis can suitably be used. If fat (a) is a lauric fat and fat (b) is a fat rich in C16 and C18 acids, we found CN44+CN46 particularly suitable as **X**. CN44 indicates the percentage of the triglycerides of which the 3 fatty acid chains together have 44 carbon atoms. For CN46, the 3 fatty acid chains have in total 46 C-atoms. If fat (a) is a liquid oil then silverphase HPLC can suitably be used. Mostly, using the S3 content is appropriate wherein S3 indicates fully saturated triglycerides. If the S3 content in fat (b) is low, then normally the $S_2O$ content, indicating triglycerides with 2 saturated residues and 1 oleic acid residue, will be appropriate. Carbon number and silverphase HPLC analysis are well known techniques. The methods are for example described in EP 78.568 and JAOCS, (1991), 68(5), 289-293, respectively.

The degree of conversion in the present process preferably is 20-93%, more preferably 30-90%, especially 50-90%.

It may perhaps be thought that the same results can be obtained by using in a margarine fat instead of a partially converted mixture, a mixture of a fully converted one and unconverted components in a corresponding ratio. We found however that this is not so. Using the partially converted mixture is more attractive, both for costs reasons and for the resulting product properties.

To obtain optimal results, in the mixture to be partially interesterified, preferably 20-80% of fat (a) and 80-20% of fat (b) are used.

With respect to the choice of fat (a), lauric fat, liquid oil or a mixture thereof may be used. By lauric fat is meant a fat having a content of lauric acid residues of at least 40%, preferably at least 45%. In practice the lauric fats will be coconut oil, palm kernel oil or babassu oil, although in principle some more rare lauric fats can be used as well. For enhancing the structuring effect thereof, in a preferred embodiment, the lauric fats are fractionated and the stearin fraction of those fats as occurring in nature are used in the interesterification.

Although the structuring effect of lauric fats may be increased by hardening, and in particular fully hardening before the interesterification, this option is less preferred than using unhardened lauric fats having regard to naturalness and other considerations mentioned herein.

The terms "fat" and "oil" are used in this specification as synonyms. Fats from which lower melting constituents have been removed will be indicated as "stearin fractions". A stearin fraction for the purpose of this description and claims is defined as a triglyceride mixture or fat blend from which at least 10% of the lower melting constituents have been removed by some kind of fractionation, e.g. dry fractionation or solvent fractionation. Similarly, an olein fraction is a fat from which at least 5% of the higher melting triglycerides have been removed in a fractionation process. A mid fraction is a fat from which, compared with the starting material, at least 3% higher melting triglycerides and at least 10% lower melting triglycerides have been removed in a fractionation process involving at least 2 separation stages.

The term "liquid oil" is used in this specification for glyceride mixtures that are free of solids at 20°C, preferably at 10°C. Preferably, the liquid oil is vegetable oil. Particularly liquid oils containing at least 40% of unsaturated fatty acids (UFA) and in particular of poly unsaturated fatty acids (PUFA), especially linoleic acid, are of importance. Specifically, the liquid oil preferably comprises sunflower oil, soybean oil, rapeseed oil, cottonseed oil, groundnut oil, maize oil, safflower oil, linseed oil, a high oleic acid residue containing variety thereof, e.g. high oleic sunflower oil, high oleic soybean oil or high oleic rapeseed oil, or a mixture of 2 or more of these oils.

Because of the reason expressed before the C16+ fats are preferably unhardened natural fats, however, still containing at least 40% saturated fatty acids (SAFA). Preferably fat (b) comprises 65-100% fatty acids residues having a chain length of 16-24. It is particularly preferred that it comprises 65-100% fatty acid residues with 16-18 carbon atoms in the chain. In a preferred embodiment the fat (b) comprises at least 65% and preferably at least 80% and more preferably at least 90% saturated fatty acids. Suitable examples of fats (b) are high stearic rape seed oil, high stearic sunflower oil, high stearic soybean oil, palm oil, mid fractions or stearin fractions thereof, and mixtures of 2 or more of such fats. However, as a less preferred option fully hardened natural oils having at least 65% C16 and longer chain fatty acids can be used.

If it is desired that the C16+ fat has a high level of saturated fatty acids, stearin fractions of naturally occurring C16+ oils may be used, whereby the above hydrogenation may be obviated.

The terms "hardstock" and "hard fat" herein refer to fatty acid triglycerides of which at least the majority, preferably at least 70%, more preferably at least 90%, of the fatty acids are saturated. Such triglyceride mixtures are solid at ambient temperatures. The hardstock may comprise two or more different hard fats.

The term "structuring fat" is used more generally to indicate fat components that contribute to the structure of a margarine or spread at ambient temperature, typically 20°C, without implying a preference for being highly saturated. Thus, "structuring fat" encompasses hardstock as well as other fat components.

The following 3 embodiments are distinct preferred versions of our process.

A. Fat (a) is lauric fat, preferably palm kernel stearin or possibly fully hardened palm kernel oil. Fat (b) comprises at least 65% and preferably more saturated fatty acid residues (SAFA). Most preferred is palm stearin with a high melting point, e.g. from solvent fractionation. As an alternative, e.g. fully hardened palm oil can be used. The resulting fat blend is a hardstock, particularly suitable for use together with high contents of liquid oil, preferably at least 75% calculated on the total amount of fat, in making so-called health spreads.

Although in this embodiment the structuring properties of the partially converted mixture may be slightly less pronounced than those of a fully converted mixture, price considerations are favouring the use of such partially converted mixture. Compared with a hardstock of a corresponding mixture of fully interesterified components and not interesterified components, our partially converted fat blend gives organoleptically better results. A partially converted hardstock mixture of a degree of conversion of at least 50% will preferably be used at a level of 8 to 25% on total fat.

Preferably in this embodiment, the degree of conversion is 60-90 %.

The structuring effect of the fat blend obtained by interesterification, when used as a hardstock is optimal if in the interesterification reaction 30-50% preferably 30-40% of the lauric fat and 50-70% preferably 60-70% of the C16+ fat are used.

B. Fat (a) is unhardened lauric fat, preferably palm kernel oil or coconut oil. Fat (b) is an unhardened C16+ fat, preferably having a melting point of less than 53°C, e.g. palm oil, palm stearin from a dry fractionation process and the like. The resulting fat blend is a structuring fat with attractive crystallisation properties and a good N-line. They can be used in high amounts in margarine fat to be used for making the end product. Compared with using components such as palm oil and/or palm stearin together with palm kernel oil without interesterification, several benefits are obtained amongst which is a better solid fat content contribution at different temperatures giving the product better sensoric properties, faster crystallisation allowing higher production speed and reduced risk of separate crystallisation of the palm kernel oil and the palm stearin during production. Such separate crystallisation increases the risk of development of product defects during storage and distribution. For example, products can become substantially softer if they are subjected to temperature cycling. Compared with a fat made by interesterification with complete conversion of such fats, the present fat blend substantially reduces the risks of graininess development in the product. Therefore it can be used in higher amounts. In this embodiment, substantial advantages can already be obtained at very low degrees of conversion, e.g. 20%. Preferably the degree of conversion is 30-90%. Especially the lower degrees of conversion can be obtained at very low costs. These fat blends can be used in margarine fats as structuring components at quite high level, e.g. as much as 50 or 60%, e.g. for making firm wrapper products that must be able to withstand fairly high temperatures.

C. Fat (a) is a liquid oil and fat (b) is a C16+ fat comprising at least 65% SAFA, preferably 80-100%, especially 90-100% SAFA. Without interesterification only little of such hard C16+ fat can be used else it would adversely affect the melt down of the product in the mouth. When applying interesterification to obtain complete conversion, structuring fat can be obtained with a much more desirable contribution to the resulting margarine or spread properties. However, often such structuring fats crystallize very slowly causing problems in production. With such a fat blend partially interesterified according to the present invention, we found faster crystallisation can result. In this embodiment the amount of liquid oil in the mixture to be interesterified preferably is at least 50%, especially 60-90%. If the interesterified mixture is fractionated and the olein is to be used as fat blend in the margarine fat for making spread or margarine, then higher amounts of fat (b) can be included in the mixture to be interesterified, e.g. up to 80%, preferably 30-70%.

A variant on these preferred embodiments that also provides very useful fat blends uses as fat (a) a combination of lauric fat and liquid oil. In this manner the properties of the fat blend can be finetuned to the intended application. In such case, when using in fats (a) and (b) only components that have not been hydrogenated the mixture to be interesterified preferably consists of

20-70%    fat (b)
5-60%     lauric fat
5-70%     liquid oil

The mixture that is partially interesterified preferably consists of fat (a) and fat (b). In such case, by selecting unhardened or carefully and essentially fully hardened products for the interesterification the trans fatty acid group level in the final fat blend can easily be limited to less than 10% and preferably less than 5% and in particular less than 1% and may even be reduced to 0.2%.

However, other fats, e.g. partially hydrogenated fat may be included in this mixture, e.g. up to 25%. Such inclusion is not preferred, however. If such other fat is included, preferably it is ensured that the trans fatty acid residue content in the final fat blend is still less than 10%, preferably 0-5%.

The process may include fractionating the partially interesterified mixture and recovering a fraction to obtain the fat blend. This can be attractive e.g. if fat (a) comprises liquid oil and an olein fraction is recovered.

The fat blend can be used as such, e.g. in certain cooking applications, e.g. soup making. For such direct application, small amounts of additives may be incorporated in the fat blend, e.g. flavour, colourant, lecithin, etc.

A "margarine fat" is a fat blend which is suitable for use as the sole fat in plastic spreads or in margarine; such a margarine fat usually includes a hardstock or other structuring fat and a liquid oil.

However, for certain applications, fat blend can be used as margarine fat without incorporation of liquid oil, e.g. for bakery applications or spreads for tropical countries if no chilled distribution is used. On the other hand, for making soft spreads packed in tubs, very high contents of liquid oil may be used in the margarine fat. The amount of fat blend in the margarine fat should however be least 8% to obtain benefits of the invention.

Accordingly, the margarine fat comprises 8-100% of our fat blend and 0-92% of liquid oil and/or other fat. The other fat may for example be palm oil, palm olein, palm stearin, palm mid fraction, coconut oil, palm kernel oil, high stearic acid residue containing varieties of e.g. soybean oil, rapeseed oil, sunflower oil etc., milk fat, and mixtures of two or more of such unhydrogenated oils. Partially or fully hydrogenated oils can be incorporated as well but this is preferably not done. In any case it must be ensured that the trans unsaturated fatty acid content of the margarine fat does not exceed 10%. Preferably, it is 0-6%, especially 0-3%.

The combined amount of fat blend and liquid oil in the margarine fat preferably is 50-100%, more preferably 70-100%, especially 85-100%. The structuring fat of the margarine fat, i.e. all fat other than liquid oil, preferably comprises 30-100%, preferably 50-100% especially 70-100% of fat blend. A combination of two or more different fat blends according to the invention can of course also be used as fat blend in the margarine fat.

The margarine fat can be used as such, optionally in plastified form, e.g. as cooking fat, shortening etc. In such case, the margarine fat may include small amounts of additives e.g. colourant, emulsifier, etc.

According to a preferred embodiment, the margarine fat is used in plastic spread. Such spread comprises a fat phase and an aqueous phase. Either or both of these can constitute a continuous phase. If the product comprises fat only in a dispersed phase, plasticity can be provided by structuring agents in the aqueous phase. Methods to do so are well known in the art. Preferably the spread has a continuous fat phase. The margarine fat is particularly suitable for this type of spread. For microbiological stability of the product it is further preferred that the aqueous phase of the spread constitutes a dispersed phase.

In a particularly preferred embodiment, the spread is a w/o emulsion spread, i.e. comprises a continuous oil phase and a dispersed aqueous phase, the fat phase comprising as margarine fat a fat that includes at least 75% liquid oil and a hardstock that comprises the present fat blend. The amount of hardstock in the margarine fat preferably is 8-25%, especially 12-20%, the balance preferably consisting of liquid oil. The amount of fat blend in the hardstock preferably is 70-100%, more preferably 90-100%, especially 100%.

The fat phase composition may contain apart from margarine fat other materials such as emulsifiers, vitamins, flavour etc. The aqueous phase may comprise apart from water, milk powder, flavour, preservative, gums, etc.

In this specification all parts, proportions and percentages are by weight unless indicated otherwise; the amount of fatty acids in an oil or fat is based on the total amount of fatty acids in said oil or fat and the amount of structuring fat, hardstock and/or hard fat in the fat composition is based on the total weight of said fat composition, unless otherwise stated.

The solid fat content (SFC) in this description and claims is expressed as N-value, essentially as defined in Fette, Seifen, Anstrichmittel 80 180-186 (1978).

For a better understanding of the, invention some practical embodiments thereof will be described in the following examples. For manufacturing spreads may be referred to various text books, e.g. The Chemistry and Technology of Edible Oils and Fats and their High Fat Products by G. Hoffmann; Academic Press London 1989, page 319 ff and in particular page 320-321.

The "Stevens" hardness St, expressed in grams, is determined after equilibration for 24 hours at the measuring temperature, using a 4.4 mm $\varnothing$ cylinder in a Stevens-LFRA Texture Analyser (ex Stevens Advanced Weighing Systems, Dunmore, U.K.) load range 1000 g operated "normal" and set at 10 mm penetration depth and 2.0 mm/s penetration rate.

The "thinness" (at 34°C or viscosity in mPa.s at a shear rate of 110 sec$^{-1}$) is determined using a Viscotester VT181, manufactured by Haake Bros., Berlin. The fat sample is equilibrated for 3 days at 15°C and brought at 34°C in the Viscotester. First the bob of the tester is rotated at position 1 for 1 minute, then switched to position 4 and the reading done 30 seconds thereafter.

## EXAMPLE 1

A solvent fractionated palm oil stearin having a palmitic acid content of 76.9% and a dry fractionated palmkernel oil stearin having an unsaturated fatty acid content of 8.1% were blended in a ratio of 50:50 and subsequently interesterified by means of an enzymic catalyst.

The enzymic interesterification reaction was carried out in a labscale packed bed reactor which contained 75 g of the supported enzyme SP392 (commercially available from Novo). The reaction temperature was 70°C and the flow was 50 g/hour. These reaction conditions resulted in a conversion of 97% calculated on the basis of carbon number analysis (Comparison 1).

A second batch of the same composition was enzymically interesterified under the same reaction conditions, with the exception of the flow being 180 g/hour. This resulted in a conversion degree of 74% calculated on the basis of carbon number analysis (Example. 1)

Both reaction products were used as hardstocks and were blended with fully refined sunflower oil in a ratio of 15:85.

From these margarine fats, Comparison 1 and Example 1 respectively, spreads were manufactured. The spreads had the following general composition:

| | |
|---|---|
| 82.8% | margarine fat |
| 0.15% | Admul 6203® (A monodiglyceride emulsifier ex Quest, Naarden, Netherlands) |
| 0.2% | Cetinol® (A lecitin composition ex Unimills, Zwijndrecht, Netherlands) |
| 16.0% | water |
| 0.6% | skimmed milk powder |
| 0.1% | potassium sorbate |

The mixtures were processed at laboratory scale through a conventional A-A-C sequence with a throughput of 5.5 kg/hr and a solids content ex C-unit of 6.0%. "A" indicates a surface scraped heat exchanger. "C" indicates a stirred crystalizer. The N-lines of both fats and the hardness and thinness values of the resulting spread products are given in Table 1.

Table 1

| Margarine Fat | Comp. 1 | Ex. 1 |
|---|---|---|
| $N_{10}$ | 11.0 | 11.6 |
| $N_{20}$ | 4.5 | 4.0 |
| $N_{30}$ | 1.0 | 2.5 |
| $N_{35}$ | 0.4 | 0.5 |
| Spreads | | |
| St 5 | 48 | 47 |
| St 10 | 38 | 38 |
| St 15 | 24 | 27 |
| St 20 | 18 | 16 |
| Thinness 34°C | 52 | 68 |

Both products showed good spreadability properties, plasticity and exhibited excellent melting behaviour. The thinness values (viscosity at 34°C) were very low compared to corresponding margarines based on interesterifications of hardened components. A panel of experts could not differentiate between the two products although the product with the lowest conversion degree contained more trisaturated triglycerides.

The products showed good stability upon long-term storage and temperature cycling.

EXAMPLE 2

35 parts of palmkernel oil and 65 parts of a palm oil stearin from a multi-stage dry fractionation process were enzymatically interesterified as described in example 1 except that the throughput was adjusted to obtain a degree of conversion of 92%.

For comparison a mixture of 35 parts of palmkernel oil and 65 parts of palm oil stearin from a solvent fractionation process were fully interesterified using a chemical catalyst in a conventional manner (comparison 2).

Margarine fats were prepared by blending 15% of each of these fat blends with 85% sunflower oil.

The N-values of the margarine fats were:

|  | Ex. 2 | Comp. 2 |
|---|---|---|
| $N_{10}$ | 11.6 | 11.1 |
| $N_{20}$ | 7.1 | 7.4 |
| $N_{30}$ | 5.0 | 4.4 |
| $N_{35}$ | 2.1 | 1.8 |

Two premixes of fat phase and aqueous phase compositions were prepared as follows:

| | |
|---|---|
| 69.7% | margarine fat |
| 0.1% | monoglyceride |
| 0.2% | lecithin |
| p.m. | β-carotene |
| 27.0% | water |
| 1.5% | salt |
| 1.5% | whey powder |
| p.m. | citric acid to pH 5.2 |

Fat continuous spreads were produced in a conventional manner using an AAAC sequence. The C-unit was operated at 200 rpm. The product had a temperature of 8.4°C at the end of the line. The fat solid contents at that stage of the process were 8-9% for both formulations. The products were filled into tubs and stored at 5°C.

After one week storage the Stevens values at 5 and 20°C, and the thinness values were measured:

|  | Ex. 2 | Comp. 2 |
|---|---|---|
| S5 | 74 | 73 |
| S20 | 43 | 34 |
| Thinness | 274 | 266 |

The products were evaluated by an experienced panel. Both were found to be good. There were no significant sensoric differences between them.

The products were evaluated again after 9 weeks storage. Both had become more firm. Both were still good products. No significant differences were observed between them.

Both products also responded to temperature cycling in very similar manner.

This example shows that the chemical interesterification and solvent fractionation can be replaced with the more mild and natural processes of partial enzymatic interesterification according to the invention and dry fractionation, without any adverse effect on the nutritional profile of the fatty acid composition or the sensorically perceivable product properties. The Stevens values were overall even slightly higher, which for such product is better, for Ex. 2 relative to Comp. 2.

EXAMPLE 3

Example 2 was repeated except that the throughput was adapted to obtain a degree of conversion of 82%

For comparison, using the same starting materials, the throughput was reduced to obtain a conversion degree of 99% (Comp. 3).

These fatblends were used to prepare margarine fats with the following compositions:

|  | Ex. 3 | Comp. 3 |
|---|---|---|
| Fatblend 82% conversion | 15% | - |
| Fatblend 99% conversion | - | 13% |
| Palmkernel oil | - | 0.7% |
| Palm oil stearin | - | 1.3% |
| Sunflower oil | 85% | 85% |

The palmkernel oil and the palm oil stearin were from the same batches that were used for preparing the interesterified fatblends. The "average degree of conversion" of the structuring fat of Comp. 3 is even somewhat higher than that of Ex. 3 ([13 x 99 + (0.7 + 1.3)x 0]/ 15 or 86% compared with 82%)

The N-values of the margarine fats were:

|  | Ex. 3 | Comp. 3 |
|---|---|---|
| N10 | 8.2 | 9.6 |
| N20 | 6.4 | 7.2 |
| N30 | 3.9 | 4.0 |

(continued)

| | Ex. 3 | Comp. 3 |
|---|---|---|
| N35 | 2.0 | 2.7 |

Spreads were prepared from these fats as described in example 2. The products were evaluated blind by an experienced panel. The panel clearly preferred the products of Ex. 3 compared with Comp. 3 for melting behaviour, taste and overall preference.

EXAMPLES 4 - 8

Example 3 was repeated except that palmkernel oil was replaced with dry fractionated palmkernel stearin. The trial was done several times using different degrees of conversions.

The premix composition was:

79.55  parts margarine fat
0.15  parts monoglyceride
16.0  parts water
0.6  parts whey powder

The Votator sequence was AAC.

The margarine fat composition and the results obtained were as follows:

|  |  | Ex. 4 | Ex. 5 | Ex. 6 | Ex. 7 | Ex. 8 |
|---|---|---|---|---|---|---|
| **Margarine fat** | | | | | | |
| Fatblend DC* | 95% | 14 | - | - | - | - |
| | 79% | - | 14 | - | - | - |
| | 61% | - | - | 14 | - | - |
| | 53% | - | - | - | 14 | - |
| | 43% | - | - | - | - | 14 |
| Sunflower oil | | 86 | 86 | 86 | 86 | 86 |
| **N-values fat** | | | | | | |
| N10 | | 11.1 | 10.8 | 10.4 | 10.1 | 10.4 |
| N20 | | 6.6 | 6.6 | 7.0 | 7.0 | 7.4 |
| N30 | | 3.2 | 3.9 | 4.4 | 4.5 | 4.9 |
| N35 | | 2.0 | 2.4 | 2.7 | 3.1 | 3.5 |
| **Stevens, Thinness (1 week)** | | | | | | |
| S5 | | 45 | 47 | 47 | 42 | 30 |
| S10 | | 46 | 39 | 40 | 35 | 25 |
| S15 | | 34 | 32 | 29 | 24 | 22 |
| S20 | | 23 | 24 | 22 | 17 | 17 |
| Thinness | | 178 | 220 | 280 | 298 | 308 |
| **Stevens (3 weeks)** | | | | | | |
| S5 | | 54 | 51 | 52 | 45 | 32 |
| S10 | | 55 | 42 | 43 | 26 | 25 |
| S15 | | 35 | 31 | 28 | 21 | 20 |
| S20 | | 22 | 21 | 19 | 15 | 16 |

*Degree of conversion

These results show that the best products are Ex. 4 and Ex. 5. Example 6 still has a suitable texture; the thinness is becoming rather high, but is still acceptable. Ex. 7 and Ex. 8 illustrate that for this type of product degrees of conversion as low as 53 and 43% are less desirable because the thinness continues to increase and the products become rather soft.

EXAMPLES 9 -11

Examples 4, 5 and 6 were repeated. For comparison also a conversion was carried out to 98%. This component was used together with not interesterified components from the same batch. The compositions used were as follows:

|  |  | Ex. 9 | Ex. 10 | Comp. 4 | Ex. 11 | Comp. 5 |
|---|---|---|---|---|---|---|
| Margarine fat | | | | | | |
| Fatblend DC* | 98% | - | - | 11.6 | - | 8.7 |
| | 95% | 14 | - | - | - | - |
| | 79% | - | 14 | - | - | - |
| | 61% | - | - | - | 14 | - |
| palm oil stearin | | - | - | 1.6 | - | 3.5 |
| palm kernel stearin | | - | - | 0.8 | - | 1.8 |
| sunflower oil | | 86 | 86 | 86 | 86 | 86 |
| (Average) DC* of structuring fat(%) | | 95 | 79 | 81 | 61 | 61 |

* Degree of conversion

Whereas there was no very clear difference in the texture and spreadability of Ex. 10 compared with Comp. 4 and of Ex.11 compared with Comp. 5, the samples of the Examples were found to have a better meltdown in the mouth than the corresponding Comparisons.

EXAMPLES 12 - 13

As starting materials, palmkernel oil and a stearin fraction from palm oil obtained by dry fractionation were used. Their fatty acid compositions were measured with FAME GLC analysis. The composition of the fatty acids on the 2-position of the triglycerides was determined as well, using partial hydrolysis of the 1,3 positions and GLC. The following results were obtained:

|  | Palmkernel oil | | Palm stearin | |
|---|---|---|---|---|
|  | Total | 2-position | Total | 2-position |
| C6 | 0.2 | - | - | - |
| C8 | 3.4 | 0.6 | - | - |
| C10 | 3.4 | 1.6 | - | - |
| C12 | 47.4 | 47.6 | 0.4 | 0.5 |
| C14 | 15.7 | 14.2 | 1.2 | 0.8 |
| C16 | 8.4 | 4.3 | 56.4 | 35.5 |
| C18 | 2.3 | 0.7 | 5.7 | 2.5 |
| C18:1 | 16.2 | 26.4 | 29.1 | 49.1 |
| C18:2 | 2.8 | 4.5 | 6.1 | 11.3 |
| C20 | 0.1 | - | 0.4 | - |
| C20:1 | 0.1 | - | 0.1 | 0.1 |
| C22 | - | - | 0.1 | - |
| Other | - | - | 0.5 | 0.2 |
| Trans | - | | - | |
| SAFA | 80.9 | | 64.2 | |

(continued)

|  | Palmkernel oil | | Palm stearin | |
|---|---|---|---|---|
|  | Total | 2-position | Total | 2-position |
| C16$^+$ | 29.9 |  | 97.9 |  |
| C16-18 | 29.7 |  | 97.3 |  |
| SMP (°C) | 27 |  | 51 |  |

A mixture of 50 parts of the palmkernel oil and 50 parts of the palmstearin were enzymatically interesterified in a packed bed reactor using as catalyst the supported 1,3 specific lipase SP 392 (Mucor miehei, immobilised on Duolite, ex Novo Nordisk, Denmark).

The temperature at which the reaction was carried out was 70°C. No solvent was used. The reaction was carried out at several different flow rates and using different amounts of enzym in the packed bed to obtain different degrees of conversion. A smale amount of product was produced at sufficiently low flow rate to obtain enough sample for analysis of a 100% converted product.

The products obtained as well as the starting materials and the 1:1 mixture prior to the interesterification were analyzed for carbon number. The following results were obtained:

|  | Palmkernel | Palmstearin | 1:1 mixture | Ex. 12 | Ex. 13 | Comp. 6 | 100% CM*[#] |
|---|---|---|---|---|---|---|---|
| CN28 | 0.2 | - | 0.1 | 0.1 | 0.1 | 0.1 | 0.1 |
| CN30 | 1.1 | <0.05 | 0.6 | 0.5 | 0.4 | 0.2 | 0.2 |
| CN32 | 6.0 | 0.1 | 3.1 | 2.3 | 1.6 | 0.8 | 0.7 |
| CN34 | 8.2 | 0.1 | 4.2 | 3.3 | 2.3 | 1.2 | 1.1 |
| CN36 | 21.0 | 0.1 | 10.6 | 8.5 | 6.4 | 3.9 | 3.7 |
| CN38 | 15.9 | 0.1 | 8.0 | 7.1 | 6.2 | 5.0 | 4.9 |
| CN40 | 9.6 | 0.1 | 4.9 | 6.8 | 8.3 | 10.0 | 10.2 |
| CN42 | 9.6 | 0.1 | 4.8 | 7.6 | 10.0 | 13.1 | 13.4 |
| CN44 | 7.1 | 0.2 | 3.6 | 6.7 | 9.8 | 14.3 | 14.4 |
| CN46 | 5.6 | 0.6 | 3.6 | 8.0 | 12.4 | 18.1 | 18.7 |
| CN48 | 6.6 | 23.4 | 14.9 | 14.5 | 14.1 | 13.7 | 13.7 |
| CN50 | 2.8 | 38.7 | 20.6 | 17.4 | 14.5 | 10.5 | 10.1 |
| CN52 | 2.9 | 27.4 | 15.0 | 12.6 | 10.3 | 7.2 | 7.0 |
| CN54 | 3.3 | 7.5 | 5.4 | 4.3 | 3.3 | 1.9 | 1.8 |
| CN56 | 0.2 | 0.5 | 0.3 | 0.3 | 0.2 | 0.1 | 0.1 |
| CN58 | <0.05 | 0.1 | 0.1 | 0.1 | 0.1 | - | - |
| CN44+CN46 |  |  | 7.2 | 14.7 | 22.2 | 32.4 | 33.1 |
| DC* |  |  | 0% | 29% | 58% | 97% | 100% |

\* DC: Degree of conversion
[#] 100% CM: Converted mixture

The CN44 and CN46 obtained for the 100% converted mixture are consistent with an estimate of the CN44 and CN46 calculated from the composition of the starting material using the 1,3 random hypothesis. The table shows that CN44 and CN46 change the most between the unconverted mixture and the 100% converted mixture, while their extremes occur for these two mixtures. Therefore $CN_{44}+CN_{46}$ suitably can be used for calculating the degree of conversion of the products obtained.

The solid fat contents of the products and of the unconverted 1:1 starting mixture were measured. The following results were obtained:

|          | 1:1 mixture | Ex. 12 | Ex. 13 | Comp. 6 |
|----------|-------------|--------|--------|---------|
| $N_{10}$ | 70.6        | 68.8   | 69.9   | 72.8    |
| $N_{20}$ | 36.4        | 34.4   | 35.1   | 37.4    |
| $N_{30}$ | 15.0        | 13.1   | 11.1   | 9.6     |
| $N_{35}$ | 10.3        | 8.1    | 5.6    | 2.1     |

## EXAMPLES 14 - 15

Using the interesterified fatblends of examples 12 and 13 and of comparison 6 and palmkernel oil and palm oil stearin from the same batches as used in these examples, a series of margarine fats were produced by mixing the components together with sunflower oil in the following proportions:

|                   | comp. 7 | Ex. 14 | Ex. 15 | comp. 8 | comp. 9 |
|-------------------|---------|--------|--------|---------|---------|
| Fatblend comp. 6  | 50      | -      | -      | 15.5    | -       |
| Fatblend ex 13    | -       | 50     | -      | -       | -       |
| Fatblend ex 12    | -       | -      | 50     | -       | -       |
| Palmkernel oil    | -       | -      | -      | 17.3    | 25      |
| Palm oil stearin  | -       | -      | -      | 17.3    | 25      |
| Sunflower oil     | 50      | 50     | 50     | 50      | 50      |
| DC* (%)           | 97      | 58     | 29     | 30      | 0       |

*DC = (Average) degree of conversion of structuring fat.

The N-values of the margarine fats were:

|          | Comp. 7 | Ex. 14 | Ex. 15 | Comp. 8 | Comp. 9 |
|----------|---------|--------|--------|---------|---------|
| $N_{10}$ | 27.9    | 26.3   | 25.5   | 27.4    | 28.2    |
| $N_{20}$ | 11.5    | 10.5   | 10.4   | 10.9    | 11.9    |
| $N_{30}$ | 1.7     | 3.5    | 4.5    | 5.6     | 7.6     |
| $N_{35}$ | 0.2     | 1.6    | 2.9    | 4.2     | 5.4     |

Using these margarine fats, premixes were produced of fat phase and aqueous phase compositions as follows:

fatphase composition

76.60    parts margarine fat
0.10    parts monoglyceride
0.15    parts lecithin
0.15    parts β-carotene solution

aqueous phase composition

| 18.90 | parts water |
| 0.30 | parts salt |
| 0.70 | parts whey powder |
| 0.10 | parts potassium sorbate |
| p.m. | citric acid to pH 4.8 |

Margarines were produced using an A-C-A-C sequence. The A-units were operated at 800 rpm, the C-units at 150 rpm. The premix temperature was 55°C. The temperature after the second A-unit was 7°C in all cases, the temperature after the last C-unit was 9.5°C. At this stage of the process the formulations all contained 16-17% crystallized fat. The products were filled into tubs and stored at 10°C.

The products were evaluated blind by an experienced panel after one week storage, after the samples had been conditioned at 15°C for 24 hours. The product of comparison 9 was rejected. Its melting in the mouth was very poor and its spreadability also was not good. The other 4 products were judged to be acceptable but of these, comparison 8 was the least liked because it had less good melting behaviour. Comparison 7 melted very quickly in the mouth, which was not appreciated by some of the panellists. Overall the sample of Ex. 14 was liked the best. The findings regarding melting in the mouth were in line with expectations in view of the N-values of the margarine fats. Indeed, we were surprised by the big difference in $N_{30}$ and $N_{35}$ between Example 15 and Comparison 8. The samples were also characterised by their Stevens values and thinness values.

A parallel set of samples from the same production runs were tested for stability to temperature cycling. These samples were stored first 2 days at 10°C, then 12 hours at 5°C and 12 hours at 20°C, this cycle of 5°C and 20°C was repeated 2 more times and then the samples were stored again at 10°C for 2 days. For these samples also Stevens and thinness values were measured. All samples were conditioned 24 hours at the measuring temperature for the Stevens values and at 15°C for the thinness values measurements. The following results were obtained:

|  | Comp. 7 | | Ex. 14 | | Ex. 15 | | Comp. 8 | | Comp. 9 | |
|---|---|---|---|---|---|---|---|---|---|---|
|  | N* | C* | N | C | N | C | N | C | N | C |
| $S_5$ | 156 | 175 | 203 | 184 | 294 | 189 | 358 | 213 | 461 | 346 |
| $S_{10}$ | 159 | 94 | 147 | 107 | 195 | 109 | 231 | 120 | 328 | 97 |
| $S_{15}$ | 62 | 54 | 63 | 47 | 72 | 49 | 69 | 60 | 132 | 99 |
| $S_{20}$ | 31 | 33 | 32 | 28 | 29 | 30 | 31 | 32 | 45 | 57 |
| Thinness | 78 | 68 | 184 | 114 | 262 | 222 | 336 | 364 | 480 | 480 |

N*: Stored at 10°C
C*: Samples subjected to temperature cycling

The results of the N-samples are consistent with the finding of the panel. The thinness of Comp. 7 is very low while those of Comps. 8 and 9 are high. The Stevens values for Comp. 9 are quite high, adversely affecting spreadability.

Upon temperature cycling, the thinness of Comp. 7 becomes even slightly lower. Those of Exs. 14 and 15 improve somewhat, while Comp. 8 deteriorates. The thinness of Comp. 9 remains unacceptably high. The Stevens values show that upon temperature cycling especially the products of Comps. 8 and 9 become very much softer at the lower temperatures. Such softening is undesirable because it causes the products to change perceivably after the consumer has left them a few times at the breakfast table for some time. The softening for the other products is less upon temperature cycling.

These trials show that with partial interesterification products can be obtained of comparable quality as when using complete conversion. For some customers the partially converted products may even be preferable. Comparison of Ex. 15 with comparison 9 shows that as little as interesterification to a degree of conversion of 29% dramatically improves the product properties. Comparison of Ex. 15 with Comp. 8 further shows that partial conversion gives better results than using a mixture of fully converted and non-converted components having overall the same average degree of conversion.

**Claims**

1. Process for preparing a fat blend comprising partially interesterifying a mixture comprising 20-90% of a fat (a) and 10-80% of a fat (b) using an enzyme catalyst to a degree of conversion of 5-95%, wherein fat (a) is selected from the group consisting of lauric fat, liquid oil and mixtures thereof and fat (b) is a $C_{16+}$ fat having mainly 16 and more carbon atoms in the constituting fatty acid chains thereof and having at least 40% SAFA.

2. Process according to claim 1 wherein the degree of conversion is 20-93%, preferably 30-90%, more preferably 50-90%.

3. Process according to claim 1 or claim 2 wherein the $C_{16+}$ fat (b) comprises 65-100% fatty acids having a chain length of 16-24, preferably 16-18 carbon atoms.

4. Process according to claims 1-3, wherein the lauric fat is unhardened.

5. Process according to claims 1-4, wherein the lauric fat is a stearin fraction of a fat occurring in nature.

6. Process according to claims 1-5 wherein the $C_{16+}$ fat (b) is a fully hardened natural oil.

7. Process according to claims 1-5, wherein the $C_{16+}$ fat (b) is a natural oil, a stearin fraction of a natural oil or a mixture thereof.

8. Process according to claims 1-7, the mixture comprising 30-50%, preferably 30-40% of lauric fat and 50-70%, preferably 60-70% of the $C_{16+}$ fat (b).

9. Process according to claims 1-8 wherein the liquid oil comprises sunflower oil, soybean oil, rapeseed oil, cottonseed oil, groundnut oil, maize oil, safflower oil, linseed oil, a high oleic acid containing variety thereof, or a mixture of two or more thereof.

10. Process according to claims 1-9 wherein the partially interesterified mixture is fractionated and a fraction is recovered

11. Fat blend obtainable by the process of any one of claims 1-10.

12. Fat blend according to claim 11, comprising less than 10% and preferably less than 5% and in particular less than 1% trans unsaturated fatty acid groups.

13. Margarine fat comprising 8-100% of fat blend according to claims 11-12 and 0-92% of liquid oil and/or other fat, said margarine fat having a trans unsaturated fatty acid content of less than 10%.

14. Plastic spread comprising a margarine fat according to claim 13.

15. Spread according to claim 14 comprising a continuous fat phase and dispersed aqueous phase.

16. Spread according to claim 15 comprising at least 15% of aqueous phase, the margarine fat comprising at least 75% liquid oil and a hard stock comprising the fat blend of claims 11-12.

**Patentansprüche**

1. Verfahren zur Herstellung einer Fettmischung, umfassend partielles Umestern einer Mischung, enthaltend 20-90% eines Fetts (a) und 10-80% eines Fetts (b), unter Verwendung eines Enzymkatalysators auf einen Umwandlungsgrad von 5-95%, wobei Fett (a) ausgewählt ist aus der Gruppe bestehend aus Laurinfett, flüssigem Öl und Mischungen hiervon und Fett (b) ein C16+-Fett mit hauptsächlich 16 und mehr Kohlenstoffatomen in den es bildenden Fettsäureketten und mit mindestens 40% SAFA ist.

2. Verfahren nach Anspruch 1, worin der Umwandlungsgrad 20-93%, bevorzugt 30-90%, besonders bevorzugt 50-90% beträgt.

3. Verfahren nach Anspruch 1 oder Anspruch 2, worin das C16+-Fett (b) 65-100% Fettsäuren einer Kettenlänge von 16-24, bevorzugt 16-18 Kohlenstoffatomen umfaßt.

4. Verfahren nach den Ansprüchen 1-3, worin das Laurinfett nicht gehärtet ist.

5. Verfahren nach den Ansprüchen 1-4, worin das Laurinfett eine Stearinfraktion eines in der Natur vorkommenden Fetts ist.

6. Verfahren nach den Ansprüchen 1-5, worin das C16+-Fett (b) ein vollständig gehärtetes natürliches Öl ist.

7. Verfahren nach den Ansprüchen 1-5, worin das C16+-Fett (b) ein natürliches Öl, eine Stearinfraktion eines natürlichen Öls oder eine Mischung hiervon ist.

8. Verfahren nach den Ansprüchen 1-7, worin die Mischung 30-50%, bevorzugt 30-40% Laurinfett und 50-70%, bevorzugt 60-70% des C16+-Fetts (b) umfaßt.

9. Verfahren nach den Ansprüchen 1-8, worin das flüssige Öl Sonnenblumenöl, Sojabohnenöl, Rapsöl, Baumwollkeimöl, Erdnußöl, Maisöl, Safloröl, Leinsamenöl, eine Variante hiervon mit hohem Ölsäuregehalt oder eine Mischung von zwei oder mehreren hiervon umfaßt.

10. Verfahren nach den Ansprüchen 1-9, worin die partiell umgeesterte Mischung fraktioniert und eine Fraktion wiedergewonnen wird.

11. Fettmischung, erhältlich durch das Verfahren nach irgendeinem der Ansprüche 1-10.

12. Fettmischung nach Anspruch 11, die weniger als 10% und bevorzugt weniger als 5% und insbesondere weniger als 1% trans-ungesättigte Fettsäuregruppen umfaßt.

13. Margarinefett umfassend 8-100% der Fettmischung nach den Ansprüchen 11-12 und 0-92% flüssiges Öl und/oder ein anderes Fett, wobei das Margarinefett einen Gehalt an transungesättigter Fettsäure von weniger als 10% besitzt.

14. Plastischer Brotaufstrich, der ein Margarinefett nach Anspruch 13 umfaßt.

15. Brotaufstrich nach Anspruch 14, der eine kontinuierliche Fettphase und eine dispergierte wässerige Phase umfaßt.

16. Brotaufstrich nach Anspruch 15, der mindestens 15% wässerige Phase umfaßt, wobei das Margarinefett mindestens 75% flüssiges Öl und ein Hartmaterial, das die Fettmischung nach den Ansprüchen 11-12 aufweist, umfaßt.

**Revendications**

1. Procédé de préparation d'un mélange gras comprenant l'interestérification partielle d'un mélange comprenant 20 à 90% d'une graisse (a) et 10 à 80% d'une graisse (b) en utilisant un catalyseur enzymatique à un degré de conversion de 5 à 95%, dans lequel on choisit la graisse (a) parmi une graisse laurique, une huile liquide et leurs mélanges et la graisse (b) est une graisse en $C_{16+}$ ayant principalement 16 atomes de carbone et plus dans ses chaînes d'acides gras de constitution et ayant au moins 40% de AGS.

2. Procédé selon la revendication 1, dans lequel le degré de conversion est de 20 à 93%, de préférence 30 à 90%, mieux 50 à 90%.

3. Procédé selon la revendication 1 ou 2, dans lequel la graisse en $C_{16+}$ (b) comprend 65 à 100% d'acides gras ayant une longueur de chaîne de 16 à 24, de préférence de 16 à 18 atomes de carbone.

4. Procédé selon les revendications 1 à 3, dans lequel la graisse laurique est non durcie.

5. Procédé selon les revendications 1 à 4, dans lequel la graisse laurique est une fraction de stéarine d'une graisse d'origine naturelle.

6. Procédé selon les revendications 1 à 5, dans lequel la graisse en $C_{16+}$ (b) est une huile naturelle complètement durcie.

7. Procédé selon les revendications 1 à 5, dans lequel la graisse en $C_{16+}$ (b) est une huile naturelle, une fraction de stéarine d'une huile naturelle ou leur mélange.

8. Procédé selon les revendications 1 à 7, le mélange comprenant 30 à 50%, de préférence 30 à 40% de graisse laurique et 50 à 70%, de préférence 60 à 70% de graisse en $C_{16+}$ (b).

9. Procédé selon les revendications 1 à 8, dans lequel l'huile liquide comprend l'huile de tournesol, l'huile de soja, l'huile de colza, l'huile de graines de coton, l'huile d'arachide, l'huile de maïs, l'huile de carthame, l'huile de lin, leur variété contenant un acide hautement oléique, ou un mélange de deux ou plusieurs de celles-ci.

10. Procédé selon les revendications 1 à 9, dans lequel on fractionne le mélange partiellement interestérifié et on récupère une fraction.

11. Mélange gras qu'on obtient par le procédé selon l'une quelconque des revendications 1 à 10.

12. Mélange gras selon la revendication 11, comprenant moins de 10% et de préférence moins de 5% et en particulier moins de 1% de groupes acides gras trans insaturés.

13. Graisse de margarine comprenant 8 à 100% de mélange gras selon les revendications 11-12 et 0 à 92% d'huile liquide et/ou d'autres graisses, ladite graisse de margarine ayant une teneur en acides gras trans insaturés de moins de 10%.

14. Pâte à tartiner comprenant une graisse de margarine selon la revendication 13.

15. Pâte à tartiner selon la revendication 14, comprenant une phase grasse continue et une phase aqueuse dispersée.

16. Pâte à tartiner selon la revendication 15, comprenant au moins 15% de phase aqueuse, la graisse de margarine comprenant au moins 75% d'huile liquide et une charge dure comprenant le mélange gras des revendications 11-12.